# EUROPEAN PATENT APPLICATION

(11) **EP 2 058 777 A1**
(43) Date of publication of application: **13.05.2009**
(21) Application number: 08721381.5
(22) Date of filing: 05.03.2008
(51) Int. Cl.: G08B 25/00, G08B 25/04, H04N 7/18

(54) **SUSPICIOUS BEHAVIOR DETECTION SYSTEM AND METHOD**

(30) Priority: 06.03.2007 JP 2007056186
(71) Applicant: Kabushiki Kaisha Toshiba, Minato-ku Tokyo 105-8001 (JP)
(72) Inventor: ENOHARA, Takaaki, Tokyo 105-8001 (JP); BABA, Kenji, Tokyo 105-8001 (JP); TOYOSHIMA, Ichiro, Tokyo 105-8001 (JP); ITAKURA, Toyokazu, Tokyo 105-8001 (JP); SUZUKI, Yoshihiko, Tokyo 105-8001 (JP); TAKAHASHI, Yusuke, Tokyo 105-8001 (JP)
(74) Representative: HOFFMANN EITLE
(86) International application number: PCT/JP2008/053961
(87) International publication number: WO 2008/111459

(57) **Abstract**

There is provided a suspicious behavior detection system capable of specifying and identifying a suspicious person exhibiting abnormal behavior. A suspicious behavior detection system (1) is a system to detect suspicious behavior of a monitored subject, by using images captured by a stereo camera (10). The suspicious behavior detection system (1) has an ambulatory path acquisition unit (21) which acquires ambulatory path information of the monitored subject, and a behavioral identification unit (22) which identifies behavior of the monitored subject based on the ambulatory path information, and automatically determines suspicious behavior of the monitored subject.

## Description

### Technical Field

The present invention relates to a suspicious behavior detection system using an optical sensor such as a camera.

### Background Art

A surveillance system for monitoring suspicious persons by using images (moving images) acquired by a video camera has been developed in recent years. Various types of surveillance system have been proposed. One surveillance system uses characteristic quantities acquired by three-dimensional high-order local autocorrelation (refer to patent document 1). Patent document 1: Jpn. Pat. Appln. KOKAI Publication No. 2006-79272

### Disclosure of Invention

A conventional surveillance system can detect suspicious behavior from an image acquired by a video camera, but cannot specify and identify a suspicious person exhibiting abnormal behavior among observed people.

It is an object of the invention to provide a suspicious behavior detection system, which can specify and identify a suspicious person exhibiting abnormal behavior.

A suspicious behavior detection system according to an aspect of the invention comprises a sensor means for detecting movement of a monitored subject ; an ambulatory path acquisition means which acquires information about an ambulatory path of the monitored subject, based on the output of the sensor means; a behavioral identification means which identifies behavior of the monitored subject, based on the ambulatory path information acquired by the ambulatory path acquisition means, by using learned information acquired by learning behavior along the ambulatory path; and a determination means which automatically determines suspicious behavior of the monitored subject in real time, based on the behavior identified by the behavioral identification means.

### Brief Description of Drawings

FIG. 1 is a block diagram showing main components of a suspicious behavior detection system according to an embodiment of the invention;
FIG. 2 is a diagram for explaining a concrete configuration of the system according to an embodiment of the invention;
FIG. 3 is a block diagram for explaining concrete configurations of an ambulatory path integration unit and a behavioral identification unit according to an embodiment of the invention;
FIG. 4 is a diagram for explaining a learning method in the behavioral identification unit according to an embodiment of the invention;
FIG. 5 is a diagram for explaining a learning method in the behavioral identification unit according to an embodiment of the invention;
FIG. 6 is a diagram for explaining a method of specifying an ambulatory path in the behavioral identification unit according to an embodiment of the invention; and
FIG. 7 is a flowchart for explaining processing steps of the suspicious behavior detection system according to an embodiment of the invention.

### Best Mode for Carrying Out the Invention

Hereinafter, an embodiment of the invention will be explained with reference to the accompanying drawings.

### (Basic configuration of the system)

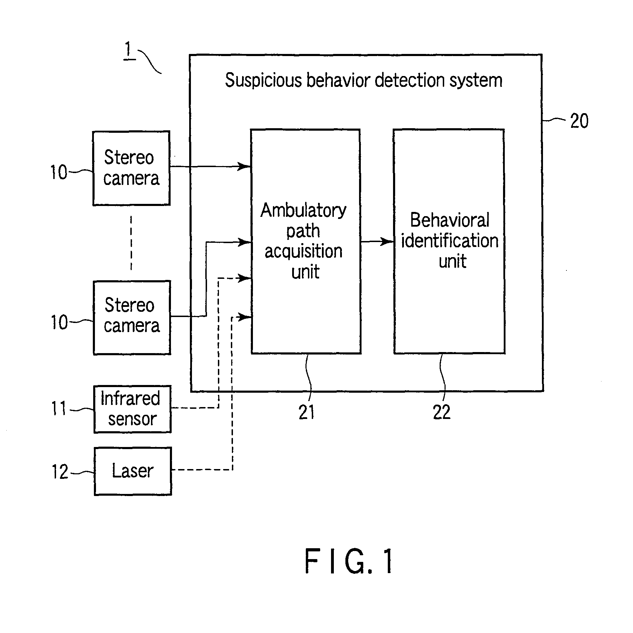

FIG. 1 is a block diagram showing main components of a suspicious behavior detection system according to an embodiment of the invention.

As shown in FIG. 1, a system 1 comprises stereo cameras 10, and a suspicious behavior detection unit 20. The stereo cameras 10 function as sensors for detecting movement of a subject, or a monitored person. The stereo cameras 10 consist of combination of cameras placed at different points of view including left/right and up/down, and transmit captured images to the suspicious behavior detection unit 20. The cameras may be two cameras placed at distant positions.

An optical sensor, an infrared sensor 11 and laser sensor 12 may be used as a sensor other than the stereo camera 10.

The suspicious behavior detection unit 20 comprises a computer system, and has functional elements, such as an ambulatory path acquisition unit 21 and a behavioral identification unit 22. The ambulatory path acquisition unit 21 has a function of processing images (stereo images) transmitted from the stereo cameras 10. According to the result of image processing, information about an ambulatory path indicating an ambulatory path of a monitored subject, or a person. Here, the ambulatory path of a person is equivalent to an ambulatory path when a person moves on foot as described later.

The ambulatory path acquisition unit 21 generates ambulatory path information integrating the ambulatory paths in imaging ranges (monitored areas) of the stereo cameras 10, based on the images transmitted from the stereo cameras 10. The integrated ambulatory path information includes information indicating an ambulatory path in a zone where a monitored and unmonitored area are continuous (connected).

The behavioral identification unit 22 stores learned information previously acquired by learning ambulatory paths, and determines suspicious behavior of a monitored subject, or a person by using the learned information, based on the ambulatory path information sent from the ambulatory path acquisition unit 21.

### (Concrete configuration, functions and effects of the system)

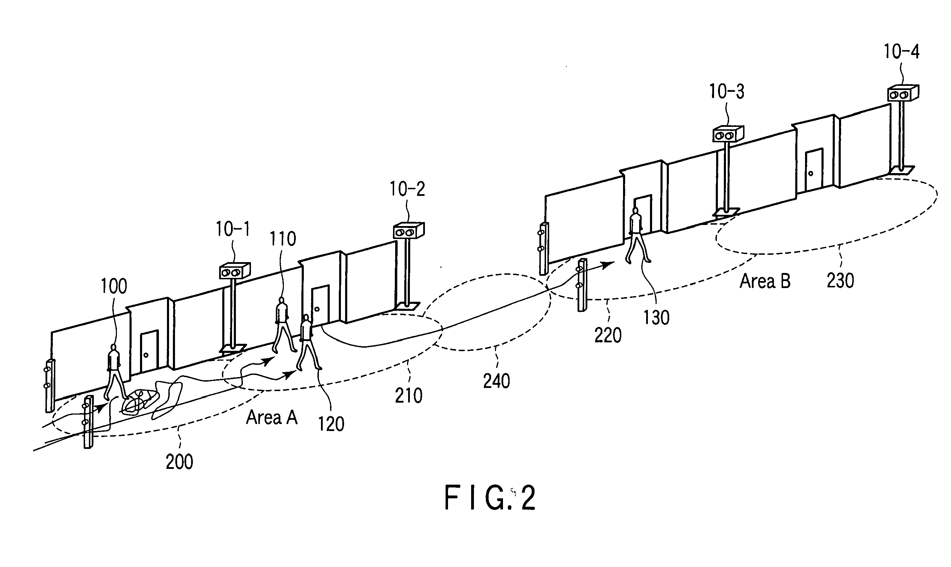

FIG. 2 is a diagram for explaining a concrete example, to which the system according to this embodiment is adaptable.

Here, it is assumed that the suspicious behavior detection system 1 is used as a surveillance system for monitoring a passage in a building. In this system, as shown in FIG. 2, four monitored areas 200, 210, 220 and 230 are defined in a passage, which are monitored by four stereo cameras 10-1 to 10-4, for example.

Further, a passage is divided into an area A and an area B. Areas A and B are connected by an unmonitored area 240. Handling of the unmonitored area 240 will be explained later. As described above, it is possible to use an infrared sensor 11 or laser sensor 12 instead of the stereo camera 10, and it is possible to monitor the same area A or B by two or more sensors. In this embodiment, four stereo cameras 10-1 to 10-4 are used for monitoring object areas.

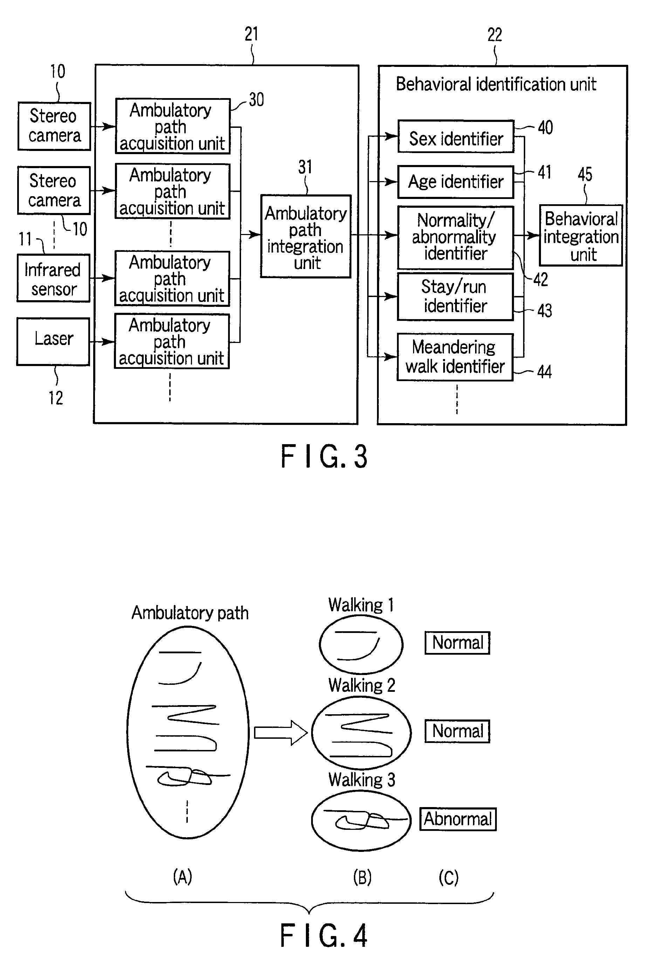

FIG. 3 is a block diagram for explaining concrete configurations of an ambulatory path integration unit 21, and a behavioral identification unit 22, included in the suspicious behavior detection unit 20.

The ambulatory path acquisition unit 21 has a plurality of ambulatory path acquisition units 30 for processing images sent from the stereo cameras 10-1 to 10-4, and acquiring information about an ambulatory path indicating an ambulatory path of a subject, or a monitored person. Further, the ambulatory path acquisition unit 21 has an ambulatory path integration unit 31 for integrating the ambulatory path information acquired by the ambulatory path acquisition units 30, and complementing an ambulatory path in an unmonitored area by the ambulatory paths in the preceding and succeeding monitored areas. The ambulatory path integration unit 31 integrates both the ambulatory path information from the monitored areas and the ambulatory path information acquired by different kinds of sensor (e.g., a stereo camera and an infrared sensor).

The behavioral identification unit 22 includes a plurality of identifier, and has a behavioral integrator 45 which outputs an integrated result of identification (determination) as a final output. By executing a majority rule, AND operation, and determination based on a certain rule, for example, as pre-processing, the behavioral integrator 45 outputs a result of identification (determination) by a method of executing identification by a learning machine, if the result is insufficient or too much.

More specifically, the behavioral identification unit 22 adopts a pattern recognition method, such as a support vector machine (SVM), and mathematically analyzes characteristics of the ambulatory path information (ambulatory path data) of a monitored subject, thereby determining suspicious behavior by teaching normal and abnormal behavioral patterns of a person.

As identifiers, there are provided a sex identifier 40, an age identifier 41, a normality/abnormality identifier 42, a stay/run identifier 43, and a meandering course identifier 44. The identifiers store learned information acquired by previously learning an ambulatory path, and execute identification by using the learned information.

For example, the age identifier 41 stores age information included in information about human nature, and information about a meandering course, as learned information. If a person meandering along a path is an elderly person, the age identifier identifies the person as a meandering elderly person. If a person meandering along a path is a child, the identifier identifies it an unaccompanied child. The learned information includes information about height according to age, walking speed, and pace.

The stay/run identifier 43 stores definitions of staying and running paths as learned information, based on ambulatory paths of average persons. Further, the normality/abnormality identifier 42 stores information indicating ambulatory paths determined normal (for example, walking straight or circuitously), and information indicating erratic ambulatory paths, determined abnormal, in front of a door (for example, indecisiveness in walking direction or remaining stationary for longer than a certain duration) as learned information, based on persons' ambulatory paths in a passage.

The behavioral integration unit 45 may select sensitive/insensitive to the results of identification by each identifier. For example, it is possible to strictly identify normality and abnormality by selecting sensitive in the nighttime for the normality/abnormality identifier 42, and not to strictly identify normality and abnormality by selecting insensitive in the daytime.

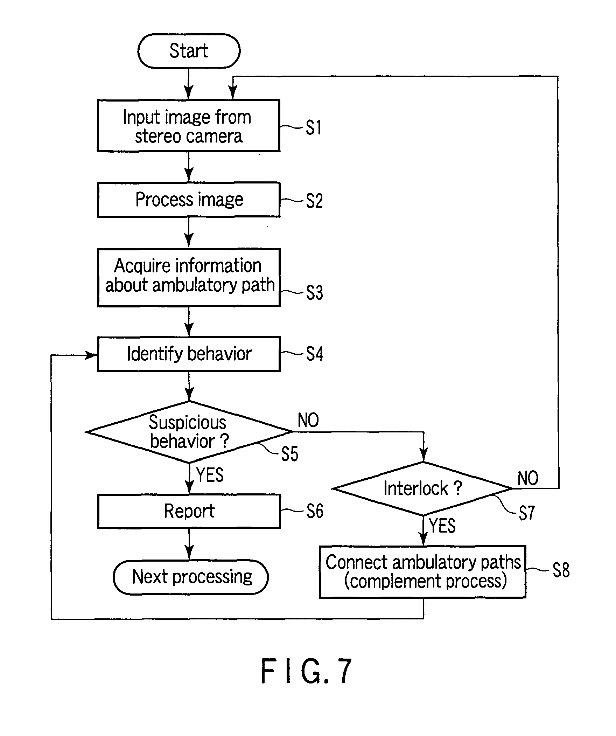

Hereinafter, an explanation will be give on the functions and effects of the system of this embodiment by referring to FIGS. 4 to 7. FIG. 7 is a flowchart showing processing steps of the suspicious behavior detection system adapted to a passage shown in FIG. 2.

First, the system inputs images captured by the stereo cameras 10-1 to 10-4 placed in the passage as shown in FIG. 2 (step S1). The ambulatory path acquisition units 30 of the ambulatory path acquisition unit 21 process stereo images, and acquire ambulatory path information in the corresponding monitored areas 200, 210, 220 and 230 (steps S2 and S3). The ambulatory path information is information indicating various ambulatory paths as shown in FIG. 4(A).

Here, the ambulatory path integration unit 31 integrates the ambulatory path information from the corresponding monitored areas 200, 210, 220 and 230, and outputs the integrated information. Further, the ambulatory path integration unit 31 interlocks the stereo cameras 10-1 to 10-4, and complements the ambulatory path in the unmonitored area 240 according to the ambulatory paths in the preceding and succeeding monitored areas.

The behavioral identification unit 22 identifies the behavior of 100 persons walking along a monitored passage, based on the ambulatory path information output from the ambulatory path acquisition unit 21 (step S4). More specifically, the identifiers 40 to 44 identify the behavior.

Here, the normality/abnormality identifier 42 will be explained.

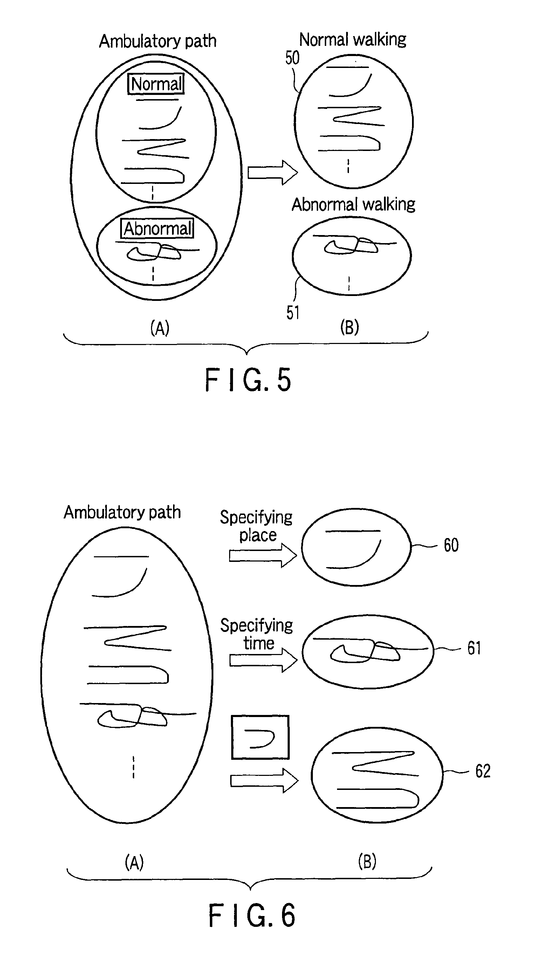

The identifiers 40 to 44 identify behavior by using the learned information acquired by learning ambulatory paths. A learning method is essentially divided into two categories: one that does not use a teacher, as shown in FIG. 4, and another that uses a teacher, as shown in FIG. 5. In the method that does not use a teacher, clustering is executed by classifying an ambulatory path into various classes, a normality/abnormality label is applied to each ambulatory class as shown by FIGS. 4(B) and 4(C), and the labeled classes are provided as learned information.

The normality/abnormality identifier 42 collates an acquired ambulatory path with the ambulatory classes by using the learned information, based on the ambulatory path information from the ambulatory path integration unit 31, and identifies the acquired ambulatory path as normal or abnormal according to the label applied to the ambulatory class. More specifically, the normality/abnormality identifier 42 identifies the ambulatory path in the monitored area 200 shown in FIG. 2 as abnormal, according to the learned information shown by FIGS. 4(B) and 4(C).

In the method that uses a teacher shown by FIGS. 5(A) and 5(B), a normal or abnormal label 50 or 51 is applied to ambulatory paths of a person, and the labeled paths are provided as learned information. The normality/abnormality identifier 42 determines whether an acquired ambulatory path is normal or abnormal by using the learned information, based on the ambulatory path information from the ambulatory path integration unit 31, and identifies the acquired ambulatory path in the monitored area 200 shown in FIG. 2 as abnormal.

FIG. 6 is a diagram for explaining a method of specifying and selecting ambulatory path data used for learning. The identifiers 40 to 44 specify various conditions, and search the stored ambulatory path information for the corresponding paths 60 to 62. For example, specifying a place refers to specifying a person passing through a certain area, or a person progressing from one place to another. Specifying time refers to specifying a person passing through a certain area on a specified day, or a person passing through a certain area at a specified time. Specifying a path refers to specifying a path by drawing a path on a screen (GUI). As an ambulatory path used for learning, there are coordinates of continued positions, abstracted characteristic quantities such as velocity and number of direction changes, continued images forming an ambulatory path, and characteristic quantities obtainable from continuous images.

The identifiers 40 to 44 periodically and automatically selects ambulatory path information (ambulatory path data) used for sequential learning based on optional conditions (duration, place, human nature, etc.) among a data group of stored ambulatory path information, by adapting a so-called sequential learning method. Otherwise, an operator may specify or select optional ambulatory path information (ambulatory path data) from a terminal.

The behavioral integration unit 45 of the behavioral identification unit 22 integrates the identification results of the normality/abnormality identifier 42 and other identifiers, and finally identifies a person exhibiting suspicious behavior (step S5). Here, the behavioral integration unit 45 considers an ambulatory path different from an ordinary ambulatory path in the monitored area 200, and if it is identified as abnormal by the normality/abnormality identifier 42, determines the behavior of the corresponding person 110 to be suspicious (YES in step S5).

When the behavioral identification unit 22 determines an ambulatory path to be suspicious, the system reports that a person 110 exhibiting suspicious behavior exists (step S6).

In a wide passage, whether or not an ambulatory path is suspicious may not be determined (NO in step S5). In such a case, the ambulatory path integration unit 31 of the system interlocks the stereo cameras 10-1 to 10-4, and connect the ambulatory paths in the monitored areas 200, 201, 220 and 230, as described previously (YES in steps S7 and S8). As for the unmonitored area 240, the system complements an ambulatory path according to the ambulatory paths in the preceding and succeeding monitored areas, and outputs ambulatory path information obtained by connecting and integrating all ambulatory paths.

Even in a wide passage, the behavioral identification unit 22 can determine whether or not a person exhibiting an abnormal ambulatory path is finally suspicious, based on the ambulatory path information obtained by connecting and integrating all ambulatory paths.

The system of this embodiment may include a unit which displays a close-up image of a suspicious person on a monitor screen by controlling the tracking and zooming functions of the cameras 10-1 to 10-4, when the behavioral integration unit 45 of the behavioral identification unit 22 detects a person whose ambulatory path is finally suspicious.

As described herein, according to the embodiment, it is possible to determine the behavior of a monitored subject, or a person, based on his (her) ambulatory path, and to identify a suspicious person whose behavior is finally abnormal. Therefore, by using the system of the embodiment as a surveillance system in a building, it is possible to automatically specify a suspicious person, and realize an effective surveillance function.

The invention is not to be limited to the embodiment described herein. The invention can be embodied by changing the forms of the constituent elements without departing from its essential characteristics when practiced. The invention may be embodied in various forms by appropriately combining the constituent elements disclosed the embodiment described above. For example, some constituent elements may be deleted from all elements of the embodiment. The constituent elements of difference embodiments may be combined.

### Industrial Applicability

The invention can realize a suspicious behavior detection system capable of specifying and identifying a suspicious person exhibiting abnormal behavior, and can be used for a surveillance system in a building.

## Claims

1. A suspicious behavior detection system **characterized by** comprising:
a sensor means for detecting movement of a monitored subject;
an ambulatory path acquisition means which acquires information about an ambulatory path of the monitored subject, based on the output of the sensor means;
a behavioral identification means which identifies behavior of the monitored subject, based on the ambulatory path information acquired by the ambulatory path acquisition means, by using learned information obtained by learning behavior along the ambulatory path; and
a determination means which automatically determines suspicious behavior of the monitored subject in real time, based on the behavior identified by the behavioral identification means.

2. The suspicious behavior detection system according to claim 1, **characterized in that** the sensor means includes a stereo camera, a single-lens camera, or other optical sensor.

3. The suspicious behavior detection system according to claim 1, **characterized in that** the sensor means has a stereo camera for imaging the monitored subject; and
an image processing means for processing image signals output from the stereo camera.

4. The suspicious behavior detection system according to claim 1, **characterized in that** the ambulatory path acquisition means has a sensor means which has cameras, and detect movement of the monitored subject in monitored areas corresponding to the imaging areas of the cameras; and
a generation means which integrates the output of the sensor means, and generates integrated ambulatory path information indicating an ambulatory path of the monitored subject extending over the monitored areas.

5. The suspicious behavior detection system according to claim 4, **characterized in that** the sensor means includes any one of stereo camera, single-lens camera, and other optical sensor, as cameras.

6. The suspicious behavior detection system according to claim 4, **characterized in that** the ambulatory path acquisition means has a completion means which executes a completion process to connect ambulatory paths of the monitored subject based on the output of the sensor means, and generates the ambulatory path information including the unmonitored area.

7. The suspicious behavior detection system according to claim 6, **characterized in that** the completion means is configured to execute the completion process based on attributive information including characteristic quantities such as height and behavioral pattern of the monitored subject.

8. The suspicious behavior detection system according to claim 1, **characterized in that** the behavioral identification means adopts a pattern recognition method, and is configured to mathematically analyze characteristics of the ambulatory path information of a monitored subject, and output information to determine suspicious behavior by teaching one of or both of normal and abnormal patterns as learned information.

9. The suspicious behavior detection system according to claim 1, **characterized in that** the behavioral identification means has a means to execute sequential learning, which periodically and automatically selects information from a data group of stored ambulatory path information, based on optional conditions (duration, place, human nature, etc.), as a method of acquiring the learned information.

10. The suspicious behavior detection system according to claim 1, **characterized in that** the behavioral identification means includes different kinds of behavioral identification means for identifying behavior with different characteristics, by using learned information with different characteristics as the learned information, based on the ambulatory path information acquired by the ambulatory path acquisition means.

11. The suspicious behavior detection system according to claim 1, **characterized by** further comprising a means to zoom in on a monitored subject determined to exhibit suspicious behavior by the determination means, by controlling tracking and zooming functions of a camera included in the sensor means.

12. A suspicious behavior detection method adapted to a suspicious behavior detection system using a sensor means for detecting movement of a monitored subject, the suspicious behavior detection method **characterized by** comprising:
a step of acquiring information about an ambulatory path of the monitored subject, based on the output of the sensor means;
a step of identifying behavior of the monitored subject, based on the ambulatory path information, by using learned information acquired by learning behavior along the ambulatory path; and
a step of automatically determining suspicious behavior of the monitored subject in real time, based on the behavior identified by the behavioral identification means.
